(19) 

Europäisches
Patentamt
European
Patent Office
Office européen
des brevets

(11) **EP 4 560 970 A1**

(12) **EUROPEAN PATENT APPLICATION**

(43) Date of publication:
**28.05.2025 Bulletin 2025/22**

(51) International Patent Classification (IPC):
*H04L 9/08* (2006.01)          *H04L 9/40* (2022.01)

(21) Application number: **23211735.8**

(22) Date of filing: **23.11.2023**

(52) Cooperative Patent Classification (CPC):
**H04L 9/0855; H04L 9/40;** H04L 2209/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Deutsche Telekom AG**
**53113 Bonn (DE)**
• **VeriQloud**
**92120 Montrouge (FR)**

(72) Inventors:
• **RIBEIRO SENA, Matheus**
**14129 Berlin (DE)**
• **GEITZ, Marc**
**58089 Hagen (DE)**
• **BRAUN, Ralf-Peter**
**12305 Berlin (DE)**
• **HARDER, Georg**
**75013 Paris (FR)**
• **KAPLAN, Marc**
**92120 Montrouge (FR)**

(74) Representative: **RDL Patentanwälte PartG mbB**
**Senefelderstrasse 26**
**70176 Stuttgart (DE)**

(54) **QKD HARDWARE DEVICE FOR A DESKTOP COMPUTER**

(57)    A quantum key distribution, QKD, hardware device for a desktop computer, comprising a circuit board with a bus connector for connecting to a bus system of the desktop computer, a desktop computer, a QKD inhouse facility and a national quantum communication infrastructure, NatQCI.

Fig. 1

**Description**

The invention relates to a quantum key distribution, QKD, hardware device for a desktop computer, comprising a circuit board with a bus connector for connecting the QKD hardware device to a bus system of the desktop computer. The invention further relates to a desktop computer, a QKD in-house facility and a national quantum communication infrastructure, NatQCI.

Quantum key distribution, QKD, allows for securely generating and sharing encryption keys to be used for encrypting payload data, the quantum encryption keys being also named QKD encryption keys. Quantum encryption keys are generated by QKD systems which can be seamlessly integrated in an existing communication network. A QKD system comprises at least two QKD nodes, which may also be named QKD boxes, and is configured for cooperatively generating the quantum encryption keys by exchanging single polarized photons, each photon representing a single qubit, i.e., a quantum bit which may also be referred to as a qbit. The QKD system is further configured for delivering the generated quantum encryption keys even to end-users, i.e., users of terminal devices, e.g., desktop computers and the like, connected to the communication network.

For the time being, a QKD system is limited to a national communication network, i.e., a communication network within a state, thus forming a national quantum communication infrastructure, NatQCI. For overcoming this limitation and allowing different member states of the European Union, EU, for sharing quantum encryption keys via European satellites, European quantum communication infrastructure, QCI, shortly EuroQCI, has been proposed, the EuroQCI comprising a plurality of NatQCIs.

The EuroQCI intends to allow terminal devices used by end-users of different EU member states for sharing quantum encryption keys.

While implementing the EuroQCI generally faces multiple technical challenges, particularly the last-mile portion of EuroQCI, i.e, local networks and terminal devices connected thereto, may result as expensive and inefficient in view of the large number of terminal devices within the EU.

It is, therefore, an object of the invention to provide a both economical and efficient means enabling a desktop computer for sharing QKD encryption keys. Further objects of the invention are to provide a desktop computer, a QKD in-house facility and a NatQCI.

An object of the invention is a quantum key distribution, QKD, hardware device for a desktop computer. The QKD hardware device is configured to cooperate with a desktop computer and, hence, within the last-mile portion of EuroQCI.

According to the invention, the QKD hardware device comprises a circuit board with a bus connector for connecting the QKD hardware device to a bus system of the desktop computer, an input optical connector, an output optical connector for connecting to an optical fiber, respectively, and an ethernet connector for connecting to an ethernet cable, and further comprising an embedded operational system, EOS, circuit, a hardware control circuit connected to the embedded operational system circuit, an ethernet switch circuit connected to the embedded operational system circuit, the hardware control circuit and the ethernet connector, and an optical module connected to the hardware control circuit and to the input and output optical connectors, the QKD hardware device providing a quantum key distribution, QKD, node. The circuit board may be immediately plugged into a motherboard of the desktop computer by means of the bus connector. The desktop computer shall be generally understood as a terminal device providing a physical interface for plugging the QKD hardware device into.

The input optical connector, the output optical connector and the ethernet connector are accessible from outside the desktop computer. Optical fibers may be connected to the optical connectors, an ethernet cable, e.g., a twisted-pair cable, may be connected to the ethernet connector to provide the QKD hardware device with an external QKD connectivity, i.e., to allow for immediately connecting the desktop computer to a QKD system of a NatQCI.

The EOS provides a central control to the QKD hardware device and is configured for executing instructions, handling data received and/or transmitted from other components of the QKD hardware device, communicating with the hardware control circuit and the bus of the desktop computer when the QKD hardware device is connected to the bus of the desktop computer and/or calibrating and/or monitoring the optical module. The hardware control circuit is configured for physically managing and controlling the optical module. The ethernet switch connector is configured for providing the QKD hardware device with a "classical" connectivity, e.g., for broadcasting a public key or synchronizing the QKD hardware device with further QKD nodes of the QKD system.

Each of the above listed components may be immediately mounted to the circuit board or loaded to memory immediately mounted to the circuit board. The QKD hardware device forms a one-piece card device to be economically manufactured and easily handled, e.g. plugged into an interface provided by a mother board of the desktop computer.

The QKD node, also named QKD box, is configured to apply a unitary operation on a single qubit enabling the QKD node to share encryption keys with other QKD nodes of the NatQCI. The QKD hardware device configures the desktop computer to form an efficient part of a QKD system of the NatQCI.

Expectably large quantities of the QKD hardware device to be manufactured render the inventive solution, after all, also very economical.

Preferably, the QKD hardware device provides a QKD intermediate node, i.e., a Charlie node as the QKD node. The QKD intermediate node operates without a laser device, i.e., has no laser device, thus, allowing for a still more economical QKD hardware device. For instance, a miniaturized version of a Qline QKD node provided by VeriQloud may form part of the QKD hardware device. Within a QKD system, the QKD intermediate node is located between a transmitting QKD node, i.e., an Alice node of the QKD system and a receiving QKD node, i.e., a Bob node of the QKD system. The QKD system may comprise a plurality of intermediate QKD nodes arranged in a series of subsequent QKD nodes. Accordingly, a plurality of QKD hardware devices may be connected to each other in series by connecting respective input optical connectors to respective output optical connectors.

The Alice node is configured for generating and transmitting a qubit, each Charlie node is configured for applying a respective phase modulation to the qubit and the Bob node is configured for measuring the qubit. The Alice node, each Charlie node and the Bob node may implement a BB84-type protocol involving phase encoding.

A qubit generated and transmitted by Alice may be generally written as

$$|\psi\rangle = \frac{1}{\sqrt{2}}\left(|0\rangle + e^{j\phi}|1\rangle\right) \text{ with } \phi \epsilon \{0, \frac{\pi}{2}, \pi, \frac{3\pi}{2}\}.$$

As each of the Alice node, the Charlie nodes and the Bob node adds a phase $\phi_p$, a total phase shift $\Phi$ may be written as

$$\Phi = \sum_{p\epsilon Q} \phi_p, \ Q = \{\text{Alice, Charlie 1, ..., Charlie N, Bob}\}.$$

The phase $\phi_p$ added by a single node may further be written as

$$\phi_p = \pi\left(b_p/2 + s_p\right), \ b_p, s_p \epsilon \{0,1\},$$

The bits $b_p$, $s_p$ may be considered random bits corresponding to a basis bit and a state bit, respectively. The nodes share a secret when

$$\sum_{p\epsilon Q} b_p \oplus 2 = 0, \ \sum_{p\epsilon Q} s_p \oplus 2 = m, \ m\epsilon\{0,1\}, \ \oplus \equiv \text{module 2,}$$

where m is measured by the Bob node. Two arbitrary non-adjacent Charlie nodes may exchange a key despite the linear topology when all basis bits and m are published and Alice and Bob additionally publish the respective state bits.

The optical module may be connected to the hardware control circuit immediately for a bidirectional communication and via a differential amplifier, DA, for a unidirectional communication. The DA amplifies analog electrical signals provided by the hardware control circuit and delivers the amplified electrical signals to the optical module. The electrical signals may determine a modulation scheme for generating quantum encryption keys.

The optical module advantageously comprises a photon detector connected to the input optical connector and to the hardware control module, a polarization controller connected to the input optical connector and the hardware control circuit, and a phase modulator connected to the polarization controller, the hardware control circuit and the output optical connector. The photon detector is configured for monitoring an optical input channel, i.e., detecting single incoming photons received via the input optical connector. The photon detector particulary detects malicious photons injected by an attacker and, upon such a detection, may cause the hardware control circuit to immediately stop the optical module in order to keep a modulation scheme applied by the phase modulator secret. The polarization controller is configured for rotating a polarization state of the incoming photons. The phase modulator circuit is configured for modulating a phase of outgoing photons, i.e., photons to be transmitted via the output optical connector.

The embedded operational system circuit may comprise a key management system, KMS, and is configured for processing data received from the KMS and/or the ethernet switch circuit and for calibrating and/or monitoring the optical module. The KMS is configured for generating quantum encryption keys having necessary properties for resist an attack, e.g., randomness, unpredictability and uniqueness, and storing generated quantum encryption keys, e.g., in hardware secure modules, HSM, or encrypted random access memory, RAM, modules. The KMS is further configured for securely distributing generated quantum encryption keys.

In an embodiment, the hardware device is configured as a peripheral component interconnect express, PCIe, card. A PCIe bus is well established and widely spread among desktop computers, i.e., substantially each mother board of a desktop computer implements a PCIe bus and allows for plugging a PCIe card into.

The PCIe card may comprise a tamper-resistant housing, i.e. enclosure, which effectively resists a mechanical intrusion. Particularly, the tamper-resistant housing comprises a material which is resistant to drilling, cutting and further harmful activities. Apart from that, the optical module may be sealed by means of a sealing material. The sealing material may be opaque, particularly for light having a wavelength of about 1550 nm, in order to prevent the light from leaking out of the optical module. The sealing material may comprise aluminum or copper as both aluminum and copper are highly reflective for light having a frequence of 1550 nm. The sealing of the optical module may be configured such that the PCIe card is irreversibly damaged and out of order when being intruded.

Another object of the invention is a desktop computer comprising a bus system. The bus system allows for easily extending a functionality of the desktop computer. The desktop computer forms a common terminal device connected to a communication network.

According to the invention, the desktop computer comprises a QKD hardware device according to the invention connected to the bus system. In other words, the desktop computer forms a fully functional QKD node to be connected to a QKD system, particularly to a QKD system of a NatQCI.

A third object of the invention is a QKD in-house facility, comprising a plurality of desktop computers. The QKD in-house facility may comprise a company building accommodating a plurality of workstations or an apartment building accommodating a plurality of personal computers, PC.

According to the invention, the QKD in-house facility comprises desktop computers according to an embodiment of the invention as the desktop computers and a first QKD terminal node, i.e., a Bob node, wherein optical modules of the hardware devices are connected in series by interlinking respective input optical connectors and output optical connectors of adjacent optical modules, a first optical module to be optically interlinked with an arrayed wavelength-grating, AWG, device and a last optical module being optically interlinked with the QKD terminal node. The first QKD terminal node comprises the components of the intermediate QKD node and may additionally comprise an optical interferometer, e.g., an unbalanced Mach-Zehnder interferometer, and an avalanche photon detector, APD, for detecting single photons. The first QKD terminal node operates without a laser device, i.e. has no laser device, thus, reducing costs of QKD in-house facility. The first QKD terminal terminates the series of intermediate QKD nodes at one end of the series. The optical links may be realized by respective optical fibers.

It is noted that the desktop computers form a fully meshed network with respect to sharing quantum encryption keys although the desktop computers are arranged in a linear topology. In other words, each desktop computer can share quantum encryption keys with each other desktop computer of the QKD in-house facility.

Preferably, ethernet switch circuits of the QKD hardware devices are connected to a quantum hub, QH, via an ethernet network. The QH provides a classical communication channel and may be, for instance, configured for supporting the QKD system, e.g., for synchronizing the QKD nodes and exchanging public keys between end-users, i.e., desktop computers of the end-users. The QH is not a QKD node and does not transmit or receive qubit photons.

A fourth object of the invention is a national quantum communication infrastructure, NatQCI. The NatQCI is an infrastructure comprising each QKD system of a state. The EuroQCI comprises NatQCIs of member states of the EU, the NatQCIs connected to each other.

According to the invention, the NatQCI comprises a plurality of QKD in-house facilities according to an embodiment of the invention and an arrayed wavelength-grating, AWG, device, wherein respective first optical modules are optically interlinked with optical output connectors of the AWG device. The AWG device comprises an input optical connector and a plurality of output optical connectors and is configured to route an incoming photon, i.e., a photon received via the input optical connector, to one of the output optical connectors dependent on a wavelength of the photon. Thus, the AWG device is configured for routing an incoming photon to a QKD in-house facility, particularly to a first desktop computer of a QKD in-house facility, the QKD in-house facility being a wavelength of the incoming photon assigned to.

Preferably, the NatQCI comprises a user ground space access point, UGSAP, station with an output optical connector optically interlinked with an input optical connector of the AWG device. The UGSAP station provides a link to other NatQCIs of the EuroQCI.

The UGSAP may comprise a second QKD terminal node, i.e., an Alice node connected to the output optical connector, the second QKD terminal node comprising a laser device. Apart from that, the first QKD terminal node comprises the components of the intermediate QKD node and may additionally comprise a variable optical attenuator, VOA.

The UGSAP is preferably configured as a trusted node comprising a computing device with a KMS and the second QKD terminal node. A trusted node comprises a QKD terminal node, i.e., an Alice node or a Bob node and is configured for relaying and/or forwarding single qubits.

The computing device may be connected to the QH via the ethernet network. Thus, the UGSAP is also connected to the QH.

In an embodiment, the UGSAP comprises a photo detector for connecting to a different NatQCI via a satellite connection, an optical fiber and/or a terrestrial free space connection, the photo detector being connected to the second QKD terminal node via a processing circuit connected to the KMS. The optical fiber connection may be implemented by a field-deployed dark fiber.

The NatQCI infrastructure preferably requires each QKD node of the NatQCI infrastructure to be authenticated.

The required authentication effectively prevents a man-in-the-middle attack which may be carried out, e.g., by connecting a malicious Bob node to a line, i.e., a sequence of QKD intermediate nodes.

The authentication may be based on pre-shared keys enabling a hash-based signature. The hash-based signature provides an unconditional security.

The authentication may be additionally or alternatively based on a public key infrastructure or a post-quantum cryptography, PQC, certificate scheme. A validity of public keys of the public-key infrastructure is confirmed by X.509 certicates. Indeed the public key infrastructure does not provide an unconditional security. However, the public key infrastructure provides an everlasting security in combination with QKD and one-time pad encryption.

An essential advantage of the inventive QKD hardware device is that terminal devices, e.g., desktop computers are easily enabled for sharing quantum encryption keys provided by QKD systems. The QKD hardware device, hence, allows for efficiently and economically providing a last-mile portion of a NatQCI and the EuroQCI as well.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.

Fig. 1    schematically shows a QKD hardware device according to an embodiment of the invention for a desktop computer;

Fig. 2    schematically shows a NatQCI according to an embodiment of the invention.

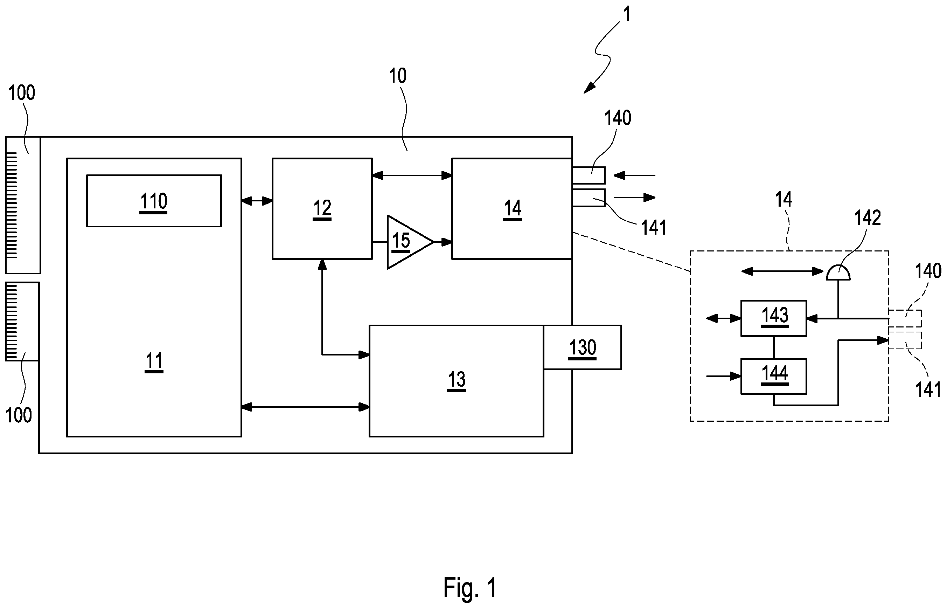

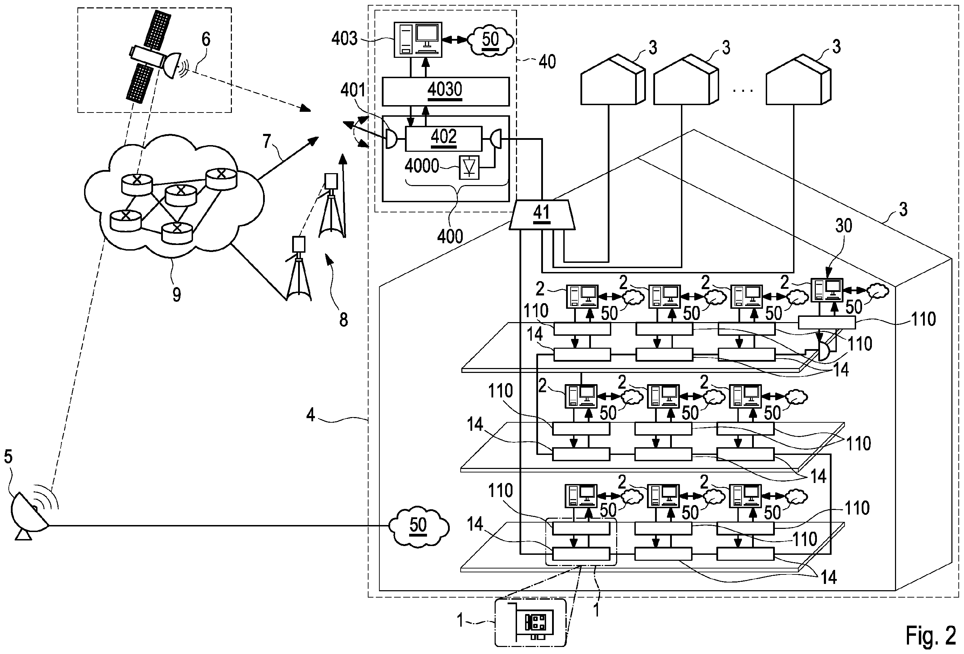

Fig. 1 schematically shows a QKD hardware device 1 according to an embodiment of the invention for a desktop computer 2 (see fig. 2). The quantum key distribution, QKD, hardware device 1 comprises a circuit board 10 with a bus connector 100 for connecting the QKD hardware device 1 to a bus system of the desktop computer 2. The QKD hardware device 1 is preferably configured as a peripheral component interconnect express, PCIe, card.

The QKD hardware device 1 further comprises an input optical connector 140, an output optical connector 141 for being connected to by an optical fiber, respectively, and an ethernet connector 130 for being connected to by an ethernet cable.

The QKD hardware device 1 further comprises an embedded operational system, EOS, circuit 11, a hardware control circuit 12 connected to the embedded operational system circuit 11, an ethernet switch circuit 13 connected to the embedded operational system circuit 11, the hardware control circuit 12 and the ethernet connector 130. The embedded operational system circuit 11 may comprise a key management system, KMS, 110 and may be configured for processing data received from the KMS 110 and/or the ethernet switch circuit 13.

The QKD hardware device 1 also comprises an optical module 14 which is illustrated separately in greater detail. The optical module 14 connected to the hardware control circuit 12 and to the input and output optical connectors 140, 141, the QKD hardware device 1 providing a quantum key distribution, QKD, node. The optical module 14 may be connected to the hardware control circuit 12 immediately for a bidirectional communication and via a differential amplifier, DA, 15 for a unidirectional communication.

The QKD hardware device 1 preferably provides a QKD intermediate node, i.e., a Charlie node, as the QKD node. The optical module 14 optionally comprises a photon detector 142 connected to the input optical connector 140 and to the hardware control module 12, a polarization controller 143 connected to the input optical connector 140 and the hardware control circuit 12 and a phase modulator 144 connected to the polarization controller 143, the hardware control circuit 12 and the output optical connector 141. The EOS circuit 11 may be further configured for calibrating and/or monitoring the optical module 14.

Fig. 2 schematically shows a NatQCI 4 according to an embodiment of the invention. The national quantum communication infrastructure, NatQCI, 4, comprises a plurality of QKD in-house facilities 3 according to an embodiment of the invention. Each QKD in-house facility 3 comprises a plurality of desktop computers 2 according to an embodiment of the invention. Each desktop computer 2 comprises a bus system and the QKD hardware device 1 shown in fig. 1 connected to the bus system.

The QKD in-house facility 3 further comprises a first QKD terminal node 30, i.e., a Bob node, wherein optical modules 14 of the hardware devices 1 are connected in series by interlinking respective input optical connectors 140 and output optical connectors 141 (see fig. 1), of adjacent optical modules 14, a first optical module 14 to be optically interlinked with an arrayed wavelength-grating, AWG, device 41 and a last optical module being optically interlinked with the QKD terminal node 30. Respective first optical modules 14 are optically interlinked with optical output connectors of the AWG device 41.

Ethernet switch circuits of the hardware devices 1 are connected to a quantum hub, QH, 5 via an ethernet network 50.

The NatQCI may further comprising a user ground space access point, UGSAP, station 40 with an output optical connector optically interlinked with an input optical connector of the AWG device 41. The UGSAP station 40 preferably comprises a second QKD terminal node 400, i.e., an Alice node connected to the output optical connector, the second QKD terminal node 400 comprising a laser device 4000.

The UGSAP station 40 may be configured as a trusted node comprising a computing device 403 with a KMS (4030) and the second QKD terminal node 400. The computing device is preferably connected to the QH 5 via the ethernet network 50.

The UGSAP station 40 may comprise a photo detector 401 for connecting to a different NatQCI 9 via a satellite connection 6, an optical fiber 7 and/or a terrestrial free space connection 8. The photo detector 401 is connected to the second QKD terminal node 400 via a processing circuit 402 connected to the KMS 4030.

**Reference Numerals**

| | |
|---|---|
| 1 | QKD hardware device |
| 10 | circuit board |
| 100 | bus connector |
| 11 | EOS circuit |
| 110 | KMS |
| 12 | hardware control unit |
| 13 | ethernet switch circuit |
| 130 | ethernet connector |
| 14 | optical module |
| 140 | input optical connector |
| 141 | output optical connector |
| 142 | photon detector |
| 143 | polarization controller |
| 144 | phase modulator |
| 15 | differential amplifier |
| 2 | desktop computer |
| 3 | in-house facility |
| 30 | first QKD terminal node |
| 4 | NatQCI |
| 40 | UGSAP station |
| 400 | second QKD terminal node |
| 4000 | laser device |
| 401 | photo detector |
| 402 | processing circuit |
| 403 | computing device |
| 4030 | KMS |
| 41 | AWG device |
| 5 | QH |
| 50 | ethernet network |
| 6 | satellite |
| 7 | optical fiber |
| 8 | free space connection |
| 9 | different NatQCI |

**Claims**

1. A quantum key distribution, QKD, hardware device (1) for a desktop computer (2), comprising a circuit board (10) with a bus connector (100) for connecting the QKD hardware device (1) to a bus system of the desktop computer (2), an input optical connector (140), an output optical connector (141) for being connected to by an optical fiber, respectively, and an ethernet connector (130) for being connected to by an ethernet cable, and further comprising an embedded operational system, EOS, circuit (11), a hardware control circuit (12) connected to the embedded operational system circuit (11), an ethernet switch circuit (13) connected to the embedded operational system circuit (11), the hardware control circuit (12) and the ethernet connector (130), and an optical module (14) connected to the hardware control circuit (12) and to the input and output optical connectors (140, 141), the QKD hardware device (1) providing a quantum key distribution, QKD, node.

2. The QKD hardware device according to claim 1, wherein the QKD hardware device (1) provides a QKD intermediate node, i.e., a Charlie node, as the QKD node.

3. The QKD hardware device according to claim 1 or 2, wherein the optical module (14) is connected to the hardware control circuit (12) immediately for a bidirectional communication and via a differential amplifier (15) for a unidirectional communication.

4. The QKD hardware device according to one of claims 1 to 3, wherein the optical module (14) comprises a photo detector (142) connected to the input optical connector (140) and to the hardware control module (12), a polarization controller (143) connected to the input optical connector (140) and the hardware control circuit (12) and a phase modulator (144) connected to the polarization controller (143), the hardware control circuit (12) and the output optical connector (141).

5. The QKD hardware device according to one of claims 1 to 4, wherein the embedded operational system circuit (11) comprises a key management system, KMS, (110) and is configured for processing data received from the KMS (110) and/or the ethernet switch circuit (13) and for calibrating and/or monitoring the optical module (14).

6. The QKD hardware device according to one of claims 1 to 5, configured as a peripheral component interconnect express, PCIe, card.

7. A desktop computer (2), comprising a bus system and a QKD hardware device (1) according to one of claims 1 to 6 connected to the bus system.

8. A QKD inhouse facility (3), comprising a plurality of desktop computers (2) according to claim 7 and a first QKD terminal node (30), i.e., a Bob node, wherein optical modules (14) of the hardware devices (1) are connected in series by interlinking respective input optical connectors and output optical connectors of adjacent optical modules (14), a first optical module (14) to be optically interlinked with an arrayed wavelength-grating, AWG, device (41) and a last optical module (14) being optically interlinked with the QKD terminal node (30).

9. The QKD inhouse facility according to claim 8, wherein ethernet switch circuits of the QKD hardware devices (1) are connected to a quantum hub, QH, (5) via an ethernet network (50).

10. A national quantum communication infrastructure, NatQCI, (4), comprising a plurality of QKD inhouse facilities (3) according to claim 8 or 9 and an AWG device (41), wherein respective first optical modules are optically interlinked with optical output connectors of the AWG device (41).

11. The NatQCI according to claim 10, comprising a user ground space access point, UGSAP, station (40) with an output optical connector optically interlinked with an input optical connector of the AWG device (41).

12. The NatQCI according to claim 11, wherein the UGSAP station (40) comprises a second QKD terminal node (400), i.e., an Alice node connected to the output optical connector, the second QKD terminal node (400) comprising a laser device (4000).

13. The NatQCI according to claim 11 or 12, wherein the UGSAP station (40) is configured as a trusted node comprising a computing device (403) with a KMS (4030) and the second QKD terminal node (400).

14. The NatQCI according to claim 13, wherein the computing device (403) is connected to the QH (5) via the ethernet network (50).

15. The NatQCI according to one of claims 11 to 14, wherein the UGSAP station (40) comprises a photo detector (401) for connecting the NatQCI (4) to a different NatQCI (9) via a satellite connection (6), an optical fiber (7) and/or a terrestrial free space connection (8), the photo detector (401) connected to the second QKD terminal node (400) via a processing circuit (402) connected to the KMS (4030).

Fig. 1

EP 4 560 970 A1

Fig. 2

**EUROPEAN SEARCH REPORT**

| | Application Number |
|---|---|
| | EP 23 21 1735 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARABUL EKIN ET AL: "100 Gb/s dynamically programmable SDN-enabled hardware encryptor for optical networks", JOURNAL OF OPTICAL COMMUNICATIONS AND NETWORKING, IEEE, USA, vol. 14, no. 1, 1 January 2022 (2022-01-01), XP011886323, ISSN: 1943-0620, DOI: 10.1364/JOCN.439677 [retrieved on 2021-11-02] * the whole document * | 1-15 | INV. H04L9/08 H04L9/40 |
| X | ARABUL E ET AL: "Experimental Demonstration of Programmable 100 Gb/s SDN-Enabled Encryptors/Decryptors for QKD Networks", 2021 OPTICAL FIBER COMMUNICATIONS CONFERENCE AND EXHIBITION (OFC), OSA, 6 June 2021 (2021-06-06), pages 1-3, XP033947445, [retrieved on 2021-07-16] * the whole document * | 1-15 | |
| A | JING WANG ET AL: "A Guide to Global Quantum Key Distribution Networks", ARXIV.ORG, CORNELL UNIVERSITY LIBRARY, 201 OLIN LIBRARY CORNELL UNIVERSITY ITHACA, NY 14853, 28 December 2020 (2020-12-28), XP081885313, * the whole document * | 1-15 | **TECHNICAL FIELDS SEARCHED (IPC)** H04L |

The present search report has been drawn up for all claims

| Place of search | Date of completion of the search | Examiner |
|---|---|---|
| Munich | 26 April 2024 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)